# EUROPÄISCHE PATENTSCHRIFT

(11) **EP 2 566 750 B1**
(45) Veröffentlichungstag und Bekanntmachung des Hinweises auf die Patenterteilung: **27.03.2019**
(21) Anmeldenummer: 11714051.7
(22) Anmeldetag: 13.04.2011
(51) Int. Cl.: B62M 25/08, B62M 6/45

(54) **VERFAHREN UND VORRICHTUNG ZUR AUTOMATISCHEN STEUERUNG DES GANGS EINES ELEKTROFAHRRAD-GETRIEBES**
METHOD AND DEVICE FOR AUTOMATICALLY CONTROLLING THE SPEED OF AN ELECTRIC BICYCLE TRANSMISSION
PROCÉDÉ ET DISPOSITIF DE COMMANDE AUTOMATIQUE D'UN RAPPORT DE CHANGEMENT DE VITESSE DE VÉLO ÉLECTRIQUE

(30) Priorität: 06.05.2010 DE 102010028658
(43) Veröffentlichungstag der Anmeldung: 13.03.2013
(73) Patentinhaber: Robert Bosch GmbH, 70442 Stuttgart (DE)
(72) Erfinder: DURDEVIC, Ivica, 72124 Pliezhausen (DE); DASBACH, Gregor, 14120 Mondeville (FR); KIMMICH, Peter, 71101 Schoenaich (DE); BRAUN, Sigmund, 72127 Kusterdingen (DE); KOHLRAUSCH, Philipp, 70180 Stuttgart (DE)
(86) Internationale Anmeldenummer: PCT/EP2011/055803
(87) Internationale Veröffentlichungsnummer: WO 2011/138139

(56) Entgegenhaltungen:
- EP-A2- 0 937 600
- EP-A2- 1 457 415
- WO-A1-00/43259
- WO-A2-2008/095116
- JP-A- 10 194 185
- JP-A- 11 147 494

## Beschreibung

### Stand der Technik

Auf dem Gebiet der Elektrofahrräder sind Gangschaltungen bekannt, um das Übersetzungsverhältnis zwischen Kurbelantrieb und Abtrieb gemäß Fahrerwunsch zu ändern.

Insbesondere sind Regelungen hierfür bekannt, in denen ein Nutzer eine Soll-Pedalfrequenz angibt, und der Gang gemäß dieser Soll-Pedalfrequenz gewählt wird, um die Ist-Pedalfrequenz daran anzugleichen.

In DE 20 2005 010 822 U1 ist ein einstellbares, stufenloses Getriebe beschrieben, das ein Übersetzungsverhältnis derart regeln, dass eine vom Fahrer vorgegebene Tretleistung konstant gehalten wird.

Die WO 00/43259 A1, welche den Oberbegriff der unabhängigen Ansprüche 1 und 7 zeigt, sowie die EP 1 457 415 A2, JP 11 147494 A, JP 10 194185 A, WO 2008/095116 A2 und EP 0 937 600 A2 offenbaren Elektrofahrräder mit Gangschaltvorrichtungen.

Die DE 20 2005 010 822 U1 offenbart eine Anfahrhilfe für Elektrofahrräder, die ein mehrstufiges Getriebe, einen elektrischen Stellmotor zur Übersetzungsänderung, einen Akku als Energiespeicher und Energielieferant für den Stellmotor, eine Steuer- und Regeleinheit, die in Abhängigkeit von einer aktuell vorhandenen Tretkraft und einer voreingestellten, gewünschten Tretleistung die Getriebeübersetzung mittels des Stellmotors ändert, und einen Schalter zum Starten der Regelungsfunktionen umfasst.

Die im Stand der Technik verwendeten Regelungsziele bieten jedoch nur einen beschränkten Komfort und berücksichtigen nicht das Problem, dass ein suboptimaler Betrieb weder erkannt werden kann, noch von der Regelung beim Einstellen des Gangs berücksichtigt wird. Es ist daher eine Aufgabe der Erfindung, eine Gangschaltungsregelung vorzusehen, die eine optimierte Betriebsweise aufweist.

### Offenbarung der Erfindung

Diese Aufgabe wird gelöst durch das Verfahren und die Vorrichtung der unabhängigen Ansprüche.

Das der Erfindung zugrundeliegende Konzept ist es, bei der Gangwahl eines Schaltgetriebes eines Elektrofahrrads nicht nur auf einzelne, vom Benutzer beliebig anzugebende Werte abzuzielen, sondern Wirkungsgrade und andere Betriebsparameter des elektrischen Antriebs in die Regelung mit einzubeziehen.

Erfindungsgemäß wird innerhalb des Regelkreises, der die Gangwahl vorsieht, mindestens ein Betriebsparameter der Elektroantriebs mit berücksichtigt, um gemäß vorgegebener Normintervalle oder Schutzintervalle oder Maximalbelastungsintervalle den Gang derart auszuwählen, dass der Betriebsparameter in dem Normintervall liegt und nicht in einem Schutz- oder Maximalbelastungsintervall, in dem entweder der Motorantrieb möglicherweise Schaden nehmen kann, oder suboptimal arbeitet.

Die Erfindung sieht ein Verfahren zur automatischen Steuerung des Gangs eines Schaltgetriebes eines Elektrofahrrads vor. Das Schaltgetriebe ermöglicht die Wahl unter einer begrenzten Anzahl von Gängen, die jeweils mit unterschiedlichen, diskreten Übersetzungsverhältnissen verknüpft sind. Durch die Wahl des Gangs lassen sich Parameter wie Elektromotordrehzahl, vom Elektromotor angeforderte Leistung und andere Betriebsparameter ändern, um die Betriebsparameter mit dem Regelungsziel zu ändern, beispielsweise den Wirkungsgrad oder die Akkumulatorleistung zu optimieren, die mit diesen Parametern verknüpft sind.

Um ferner beispielsweise die mechanische Belastung des Schaltgetriebes zu reduzieren (unter ein vorgegebenes Niveau), kann auch der Zeitpunkt des Gangwechsels gezielt gewählt werden, so dass der Gangwechsel bei einem Belastungsmoment ausgeführt wird, das unter einem vorgegebenen Niveau liegt. Das Belastungsmoment ist unmittelbar mit dem Drehmomenten verknüpft, die vom Fahrer auf die Tretkurbel ausgeübt werden bzw. vom Motor in den Antriebsstrang eingebracht werden. Daher kann ein geringes momentanes Drehmoment abgewartet werden, um einen gewünschten Gangwechsel auszuführen, bzw. beim Gangwechsel gezielt das Motormoment reduziert werden. Hierbei steht nicht die richtige Wahl des Gangs im Vordergrund (wie im vorangehenden Beispiel), sondern die zeitliche Ansteuerung, mit der ein Gang gewechselt wird.

Erfindungsgemäß wird mindestens ein Ist-Betriebsparameters einer Antriebskomponente des Elektrofahrrads erfasst. Als Ist-Betriebsparameter wird eine Betriebsgröße der Antriebskomponente verstanden. Der Ist-Betriebsparameter bzw. die Betriebsgröße ist eine physikalische Größe, die den aktuellen Betrieb der Antriebskomponente wiedergibt und die durch (mindestens) einen Sensor erfasst werden kann, beispielsweise ein Drehzahlsensor oder ein Drehmomentsensor, wobei die Betriebsgröße auch aus Sensordaten oder Ansteuerinformation (bsp. zur Ansteuerung der Drehzahl, der Leistung, des Drehmoments oder des Motorstroms) abgeleitet werden kann.

Es wird eine Betriebsgröße der Antriebskomponente erfasst. Der zugehörige mindestens eine Ist-Betriebsparameters wird mit einer Soll-Vorgabe verglichen, die einen optimaleren Betriebspunkt des Elektroantriebs wiedergibt, d.h. ein die mit einem höheren Wirkungsgrad, einer höheren Sicherheit oder einer höheren Langlebigkeit von Komponenten des Elektroantriebs oder sonstiger, von dem Elektroantrieb angetriebene Antriebskomponente verknüpft ist. Die Sollvorgabe ist mit einem Wirkungsgrad, einer Sicherheit oder einer Langlebigkeit verknüpft, der bzw. die größer ist als bei dem aktuellen Betrieb, d.h. einem Betrieb gemäß dem mindestens einen Ist-Betriebsparameter. Der mindestens eine Ist-Betriebsparameters wird erfindungsgemäß an die Soll-Vorgabe angenähert durch Ändern des Gangs, d.h. durch Ansteuern des Schaltgetriebes. Das Schaltgetriebe wird automatisch, bsp. von einer elektrischen oder elektronischen Steuerung angesteuert, wobei die oben genannten Schritte des Erfassens und Vergleichens ebenso automatisch, d.h. von der Steuerung, ausgeführt werden.

Die Soll-Vorgabe betrifft die selbe physikalische Größe wie der Ist-Betriebsparameter, insbesondere Größen, die den Betriebszustand einer Antriebskomponente wiedergeben. Aus diesem Grund kann die Soll-Vorgabe auch als Soll-Betriebsparameter bezeichnet werden.

Als Regelkreis betrachtet wird der Ist-Betriebsparameter oder eine davon abgeleitete Größe zurückgeführt, der Vergleich wird gebildet durch Erfassen einer Abweichung zwischen Soll- und Ist-Größe, wobei als Stelleinrichtung innerhalb des Regelkreises das Schaltgetriebe (bzw. ein elektrischer Aktor, der die Gänge wechselt) geschaltet wird. Eine Korrektureinrichtung innerhalb des Regelkreises entscheidet, ob sich der Ist-Betriebspunkt durch Ändern des Gangs verbessern lässt, wobei die Gänge mehrere, diskrete unterschiedliche Übersetzungsverhältnisse zwischen Antrieb und Abtrieb vorsehen, wobei die Korrektureinrichtung vorzugsweise eine Hysterese vorsieht, um an Übergangsbereichen sich wiederholende, alternierende Gangwechsel zu vermeiden. Das Regelungsziel ist eine möglichst nahe Annährung (einschließlich Übereinstimmung) zwischen dem Ist-Betriebszustand und einem Zustand, bei dem, abhängig von der Ausführung der Erfindung, der Wirkungsgrad, die Sicherheit oder die Langlebigkeit der Antriebskomponenten maximal ist.

Der Wirkungsgrad ist insbesondere der Wirkungsgrad des Elektromotors, gegebenenfalls einschließlich der Leistungsansteuerung, die den Elektromotor versorgt und dem nachgeschalteten Getriebe. Ebenso kann der Wirkungsgrad des Akkumulators berücksichtigt werden. Der Wirkungsgrad hängt insbesondere von der Drehzahl oder anderen Betriebsparametern des Elektromotors ab gemäß den designbedingten Eigenschaften des Motors. Die Abhängigkeit zwischen Wirkungsgrad und Ist-Betriebsparameter (bsp. Drehzahl) des Motors ist kontinuierlich und ist in der Vorrichtung, die die Steuerung vorsieht, hinterlegt, beispielsweise als Kennlinie oder einzelnen Kennlinienpunkten.

Die Sicherheit betrifft die Ausfallwahrscheinlichkeit von Antriebskomponenten (d.h. Elektromotor, Tretkurbelantrieb, davon angetriebene Komponenten, sowie den Akkumulator, der den Elektromotor versorgt), wobei eine hohe Sicherheit mit einer geringen Ausfallwahrscheinlichkeit verknüpft ist. Die Abhängigkeit zwischen Sicherheit (d.h. einem Wert, der die Sicherheit wiedergibt, bsp als Kehrwert der Ausfallwahrscheinlichkeit) und Ist-Betriebsparameter (bsp. Drehzahl) des Antriebs, bsp. Temperatur des Motors oder des Akkumulators, ist in der Vorrichtung, die die Steuerung vorsieht, hinterlegt. Die Abhängigkeit kann insbesondere nicht kontinuierlich sein, beispielsweise in Form eines Grenzwerts, der einen Normalbetrieb mit hoher Sicherheit von einem Extrembetrieb mit deutlich höherer Ausfallwahrscheinlichkeit trennt. Das Verfahren greift in diesem Fall nur ein, wenn der Normalbetrieb verlassen wird, d.h. der Grenzwert überschritten wird, so dass die Regelung mit diskreten Werten arbeitet. Die Sicherheit betrifft insbesondere das Schaltgetriebe selbst, wobei ein Schaltvorgang bei einem Tretkurbel-Drehmoment über einer vorgegebenen Grenze als unsicher (= geringe Sicherheitswert) eingestuft wird, und unterhalb der vorgegebenen Grenze mit einer höheren Sicherheit eingestuft wird.

Die Grenze gibt das Tretkurbel-Drehmoment wieder, ab dem ein Schaltvorgang (bei diesem Drehmoment) dazu führen kann, dass das Schaltgetriebe nicht ausschließlich die angesteuerte Bewegung ausführt, d.h. das Schaltgetriebe auf einen nicht gewünschten Gang springt aufgrund des hohen Drehmoment. Weiterhin kann die Grenze den Drehmomentwert angeben, bei dem sich eine Funktionsbeeinträchtigung des Schaltgetriebes ergibt, wobei die Funktionsbeeinträchtigung vorübergehend oder andauernd sein kann. Die Grenze ergibt sich unmittelbar aus der mechanischen Belastbarkeit des Getriebes und kann somit gemäß dem Schaltgetriebedesign vorgegeben sein.

Die Langlebigkeit betrifft die Normbelastbarkeit von Antriebskomponenten (d.h. insbesondere das Schaltgetriebe, sowie ferner Elektromotor, Tretkurbelantrieb, davon angetriebene weitere Komponenten, sowie den Akkumulator, der den Elektromotor versorgt), wobei eine hohe Sicherheit mit einer geringen Ausfallwahrscheinlichkeit verknüpft ist. Die Langlebigkeit hängt insbesondere von dem Drehmoment ab, mit dem der Tretkurbelantrieb betätigt wird bzw. die der Motor abgibt oder auch von der Drehzahl des Motors oder von der Temperatur des Motors bzw. des Akkumulators oder der Leistungsansteuerung, die den Motor versorgt, gemäß den designbedingten Eigenschaften dieser Komponenten. Die Abhängigkeit zwischen Langlebigkeit (d.h. einem Wert, der die Abnutzung der Komponenten wiedergibt) und Ist-Betriebsparameter, d.h. auf das Schaltgetriebe wirkendes Drehmoment, oder Drehmoment, Drehzahl oder Leistung des Motors, oder Temperatur des Motors, der zugehörigen Leistungsansteuerung, oder des Akkumulators, ist in der Vorrichtung, die die Steuerung vorsieht, hinterlegt. Die Abhängigkeit kann insbesondere nicht kontinuierlich sein, beispielsweise in Form eines Grenzwerts, der einen Normalbetrieb mit hoher Sicherheit von einem Extrembetrieb mit deutlich höherer Ausfallwahrscheinlichkeit trennt. Das Verfahren greift in diesem Fall nur ein, wenn der Normalbetrieb verlassen wird, d.h. der Grenzwert überschritten wird, so dass die Regelung mit diskreten Werten arbeitet. Ferner kann das Verfahren einen Gangwechsel zurückhalten, bis ein Betriebsbereich erreicht wird, der mit einer hohen Langlebigkeit (d.h. geringen Abnutzung) verknüpft ist. Hierbei wird der Betriebsbereich anhand eines Betriebsparameters erfasst, bsp. anhand des Tretkurbel-Drehmoments, wobei sich dieser periodisch mit der halben Kurbelumdrehung ändert, so dass die Verzögerung die Dauer einer halben Kurbelumdrehung nicht überschreitet. Ferner kann der Betriebsparameter über ein Zeitfenster (bsp. 1 - 10 sec) gemittelt werden, um üblicherweise häufig auftretende Phasen schwächerer Tretkurbelbetätigung (d.h. geringem Tretkurbel-Drehmoment) zu erfassen, und bei Unterschreitung der Drehmomentgrenze den zwischengespeicherten Schaltvorgang auszulösen.

Gemäß einer ersten Ausführungsform wird als der mindestens eine Ist-Betriebsparameter die Drehzahl des Elektromotors als Betriebsgröße der Antriebskomponente erfasst. Die Soll-Vorgabe gibt eine Drehzahl wieder, bei der der Elektromotor mit einem höheren Wirkungsgrad arbeitet, als die erfasste Drehzahl, die den Ist-Betriebsparameter darstellt. Der Gang wird derart ausgewählt, dass der Wirkungsgrad des Elektroantriebs höher ist, als bei anderen Gängen. Da mit dem Gang das Übersetzungsverhältnis des Schaltgetriebes bestimmt wird, ergibt sich hieraus unmittelbar ein Zusammenhang zwischen gewähltem Gang und Drehzahl des Motors bei einer gegebenen Geschwindigkeit. Das steuerbare Übersetzungsverhältnis ist somit in dem Regelkreis eingebunden, der die Antriebsleistung des Elektromotors bestimmt.

Gemäß einer zweiten Ausführungsform wird als der mindestens eine Ist-Betriebsparameter ein Tretkurbel-Drehmoment als Größe von angetriebenen Elektrofahrradkomponenten erfasst. Das Tretkurbel-Drehmoment entspricht dem Antriebsdrehmoment der Tretkurbel. Die Soll-Vorgabe gibt ein Maximaldrehmoment (d.h. eine Grenze) wieder, unterhalb derer die Tretkurbel-Antriebskomponenten, insbesondere das Schaltganggetriebe, ohne bleibende Schäden einen Gangwechsel durchführen können. Ein Zeitpunkt eines Gangwechsels wird derart ausgewählt, dass das erfasste Tretkurbel-Drehmoment während des Gangwechsels unter dem Maximaldrehmoment liegt. Dadurch wird die Sicherheit bzw. Langlebigkeit maximiert.

Eine Variante der zweiten Ausführungsform sieht vor, dass ein Gangwunsch eingegeben wird. Wenn der Gangwunsch von dem aktuellen Gang abweicht, wird ein Gangwechsel, der dem Gangwunsch entspricht, verzögert, bis der Zeitpunkt des Gangwechsel erreicht ist, bei dem das erfasste Tretkurbel-Drehmoment und das Motordrehmoment unter dem Maximaldrehmoment liegen.

Gemäß einer dritten Ausführungsform wird der mindestens eine Ist-Betriebsparameter in Form der Drehzahl des Hinterrads als Betriebsgröße des Elektromotors und des Schaltgetriebes als Antriebskomponenten erfasst. Da das Schaltgetriebe ein bekanntes Übersetzungsverhältnis aufweist, und das Übersetzungsverhältnis des Motorgetriebes designbedingt vorgegeben ist und bekannt ist, kann anstatt einer unmittelbaren Erfassung der Motordrehzahl (d.h. des Rotor des Elektromotors) die Hinterraddrehzahl ermittelt werden, aus der ohne weiteres auf die Motordrehzahl (anhand der bekannten Übersetzungsverhältnisse) geschlossen werden kann. Es erfolgt daher erfindungsgemäß eine Umrechnung von der Hinterraddrehzahl auf die Elektromotordrehzahl anhand der bekannten Übersetzungsverhältnisse. Alternativ kann der Vergleich der Regelung in einer Ebene ausgeführt werden, die sich von der Elektromotordrehzahl unterscheidet, so dass verfahrensgemäß die Soll-Vorgabe eine Hinterraddrehzahl, abhängig vom eingestellten Gang, wiedergibt, und als Ist-Vorgabe die Hinterraddrehzahl selbst verwendet wird. Ergibt der Vergleich eine Abweichung zwischen Soll- und Ist-Vorgabe, dass der aktuelle Wirkungsgrad mehr als eine vorgegebene Marge (oder Maximalabweichung) von einem besseren Wirkungsgrad abweicht, der sich bei einem anderen Übersetzungsverhältnis des Schaltgetriebes ergeben würde, dann wird das Schaltgetriebe auf das Übersetzungsverhältnis (durch Wahl des Gangs) eingestellt, das mit einem besseren Wirkungsgrad des Elektromotors verknüpft ist. Gemäß der dritten Ausführungsform gibt die Soll-Vorgabe eine Drehzahl des Hinterrads in Abhängigkeit des gewählten Gangs wieder, die mit einer Drehzahl des Elektromotors verknüpft ist, bei der dieser mit einem höheren Wirkungsgrad arbeitet. Der Gang wird derart ausgewählt, dass der Wirkungsgrad der Elektroantriebs höher ist, als bei anderen Gängen. Der ausgewählte (d.h. anzusteuernde) Gang sieht zusammen mit der Drehzahl des Elektromotors, bei der ein höherer Wirkungsgrad erreicht wird, eine Drehzahl des Hinterrads vor, die nicht mehr als eine vorgegebene Maximalabweichung von dem erfassten Drehzahl des Hinterrads abweicht. Durch diese Maßnahme wird die Geschwindigkeit des Fahrrads so gut wie möglich beibehalten, wobei gleichzeitig der Wirkungsgrad durch geeignete Gangwahl optimiert wird.

Gemäß einer vierten Ausführungsform wird als der mindestens eine Ist-Betriebsparameter ein Strom des Elektromotors erfasst, den der Elektromotor aufnimmt. Die Soll-Vorgabe gibt einen Maximalabgabestrom wieder, unterhalb dem ein Akkumulator, der den Elektromotor versorgt, ohne bleibende Schäden und ohne die Gefahr der Überhitzung verbleibt, wobei der Gang derart ausgewählt wird, dass der Strom unter dem Maximalabgabestrom liegt. Dadurch wird die Langlebigkeit erhöht bzw. die Ausfallsicherheit verringert, da der Akkumulator nicht außerhalb des Normbereichs betrieben wird, wobei dies durch geeignete Gangwahl erreicht wird. Ferner kann eine Rückkehr in den Normbereich (von einem Extrembetriebsbereich aus) dadurch erreicht werden, dass durch die Gangwahl der Elektromotor mit einem besseren Wirkungsgrad betrieben wird, wodurch sich die Stromaufnahme und somit die Belastung des Akkumulators ändert. Die Grenze, die den Normbereich markiert, hängt von der Temperatur des Akkumulators und ggf. von dessen Ladezustand ab, so dass diese beiden Parameter von der erfindungsgemäßen Steuerung ebenso berücksichtigt werden, um die Langlebigkeit des Akkumulators zu erhöhen und die Ausfallwahrscheinlichkeit zu verringern. Anstatt des Akkumulators oder in Kombination hiermit kann auch ein Betriebsparameter der Leistungsendstufe des Motors (bsp. die Temperatur der Leistungsansteuerung) in gleicherweise wie Betriebsparameter des Akkumulators berücksichtigt werden.

Gemäß einer fünften Ausführungsform, die ebenso den Akkumulator betrifft, wird als der mindestens eine Ist-Betriebsparameter ein Strom des Elektromotors erfasst wird, den der Elektromotor aufnimmt. Die Soll-Vorgabe gibt einen Maximalabgabestrom wieder, unterhalb dem ein Ladezustand eines Akkumulators, der den Elektromotor versorgt, ausreichend ist, den Elektromotor für eine vorgegebene Distanz zu versorgen. Somit kann auch der Ladezustand als Ist-Betriebsparameter in der Regelung berücksichtigt werden, wobei sich die Gangwahl hiernach richtet. Der Gang wird derart ausgewählt wird, dass der sich aus Distanz und Ladezustand ergebende Maximalabgabestrom nicht überschritten wird. Die zu überbrückende Distanz kann durch eine Benutzerschnittstelle eingegeben werden.

Die vorgenannten Ausführungsformen können beliebig miteinander kombiniert werden, wobei als Soll- und Ist-Betriebsparameter alle hier genannten Betriebsgrößen der Antriebskomponente vorgesehen werden können. Die Antriebskomponenten sind insbesondere der Elektromotor, das Elektromotorgetriebe, der Tretkurbelantrieb, das Schaltgetriebe sowie der Abtrieb. Die Erfindung ermöglicht eine Optimierung der Betriebsparameter dieser Antriebskomponenten anhand der Gangwahl, die von dem Schaltgetriebe und insbesondere durch einen elektromechanischen Aktor vorgenommen wird, der das Schaltgetriebe schaltet.

Die Soll-Vorgabe wird aus mehreren Soll-Vorgaben gemäß einem wählbaren Fahrprogrammen ausgewählt. Verschiedenen Fahrprogrammen sind unterschiedliche Soll-Vorgaben zugeordnet. Die Fahrprogramme können über eine Benutzerschnittstelle eingegeben werden.

Die Erfindung betrifft ferner eine Vorrichtung zur automatischen Steuerung des Gangs eines Schaltgetriebes eines Elektrofahrrads. Die Vorrichtung umfasst: eine Sensorvorrichtung eingerichtet zum Erfassen mindestens eines Ist-Betriebsparameters einer Antriebskomponente des Elektrofahrrads, wobei die Sensorvorrichtung mit der Antriebskomponente verbunden ist, um eine Betriebsgröße der Antriebskomponente zu erfassen. Die Vorrichtung umfasst ferner eine Vergleichsvorrichtung eingerichtet zum Vergleichen des mindestens einen Ist-Betriebsparameters mit einer Soll-Vorgabe, die einen Betriebspunkt des Elektroantriebs wiedergibt, der mit einem höheren Wirkungsgrad, einer höheren Sicherheit oder einer höheren Langlebigkeit von Komponenten des Elektroantriebs oder der Antriebskomponente verknüpft ist.

Die Soll-Vorgabe ist in einem Speicher der Vorrichtung abgelegt. Die Vorrichtung umfasst zudem einen Gangschaltungsaktor, der zum Ändern des Gangs eines an den Gangschaltungsaktor anschließbaren Schaltgetriebes des Elektrofahrrads eingerichtet ist. Die Vorrichtung sieht ferner eine Steuerung vor, die mit der Vergleichsvorrichtung verbunden ist, um eine von der Vergleichsvorrichtung vorgesehene Differenz zwischen Ist-Betriebsparameters und Soll-Vorgabe zu empfangen. Die Steuerung ist eingerichtet, durch Ansteuern des daran angeschlossenen Gangschaltungsaktors den mindestens einen Ist-Betriebsparameters an den Soll-Betriebsparameters durch Ändern des Gangs anzunähern.

### Kurze Beschreibung der Figur

Ausführungsbeispiele der Erfindung sind in der Figur dargestellt und werden in der nachfolgenden Beschreibung näher erläutert.

Es zeigt:

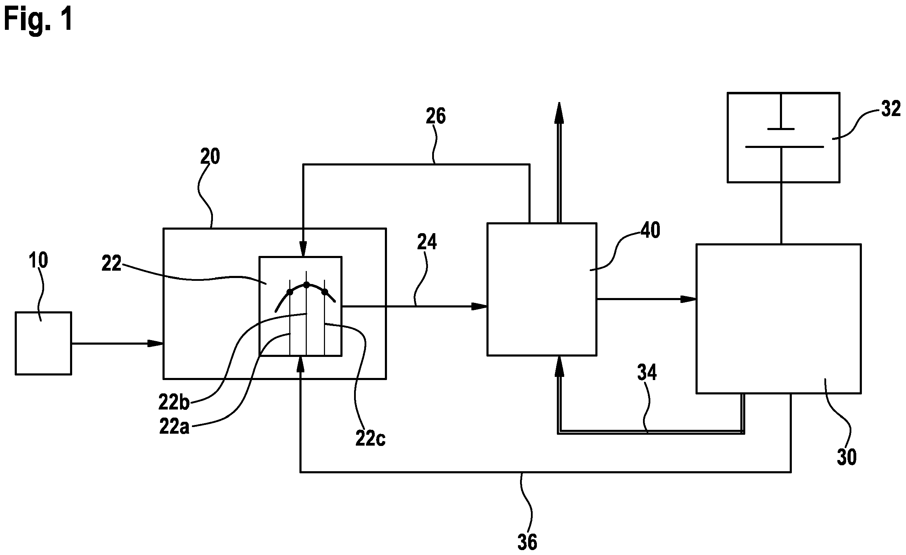

- Figur 1: einen Regelkreis zur Erläuterung des erfindungsgemäßen Verfahrens

### Ausführungsbeispiele

In Figur 1 stellt einen Regelkreis dar, der eine Ausführung des erfindungsgemäßen Verfahrens schematisch wiedergibt.

Der in Figur 1 dargestellte Regelkreis sieht eine Regelvorgabe 10 vor, die in dem Vergleichsglied 20 implementiert ist. Zum besseren Verständnis ist Regelvorgabe 10 als einzelnes Element dargestellt. Regelvorgabe 10 gibt als Regelziel einen maximalen Wirkungsgrad des Elektromotors 30 vor. In dem Vergleichsglied 20 liegt eine Kennlinie 22 des Elektromotors 30 vor, die symbolisch dargestellt ist, wobei auf der y-Achse der Kennlinie 22 der Wirkungsgrad und auf der x-Achse der Kennlinie 22 die Drehzahl aufgetragen ist. In dem Vergleichsglied 20 ist somit ein Zusammenhang zwischen einer Ist-Betriebsgröße (Drehzahl des Elektromotors) und der resultierenden Größe der Regelvorgabe (d.h. der Wirkungsgrad) hinterlegt.

Der Motor umfasst gegebenenfalls ein nicht dargestelltes Getriebe, dessen Übersetzungsverhältnis in dem Vergleichsglied hinterlegt ist. Der Motor wird von dem Akkumulator 32 angetrieben und wandelt die übermittelte elektrische Leistung in Motorleistung um, deren Übertragung mit einem Doppelpfeil 34 dargestellt ist. Der Motor 30 ist über die mechanische Leistungsübertragung 34 mit dem Schaltgetriebe 40 verbunden, das die Motorbewegung gemäß dem eingestellten Gang des Getriebe 40 in Drehzahl in Drehmoment umsetzt. Das Getriebe 40 gibt die umgewandelte Drehbewegung an einen Abtrieb (nicht dargestellt) ab.

Das Vergleichsglied 20 gibt als Stellgröße einen einzustellenden Gang (d.h. ein Übersetzungsverhältnis einer begrenzten Anzahl an einstellbaren Übersetzungsverhältnissen) an das Schaltgetriebe 40, bsp. eine Fahrrad-Kettenschaltung, aus. Das Schaltgetriebe 40 wird von dem Vergleichsglied 20 angesteuert und bildet das Stellglied der Regelung. Durch die ansteuernde Verbindung 24, die vom Vergleichsglied 20 zum Schaltgetriebe 40 führt, liegt die Information über den aktuellen Gang in dem Vergleichsglied 20 vor. Der zusätzliche Pfeil 26 stellt den zugehörigen Informationsfluss dar, der jedoch nicht tatsächlich stattfinden muss, wenn angenommen wird, dass das Schaltgetriebe 40 den angesteuerten Gang einlegt. Der zusätzliche Pfeil 26 kann von einem zusätzlichen Gangsensor an dem Schaltgetriebe 40 ausgehen, der den tatsächlichen Gang erfasst und an das Vergleichsglied 20 meldet. Das Vergleichsglied 20 erhält ferner über die Verbindung 36 die aktuelle Drehzahl des Elektromotors 30 als Ist-Betriebsparameter, um daraus den aktuellen Wirkungsgrad ableiten zu können.

Falls lediglich die Fahrgeschwindigkeit, d.h. die Drehzahl des Laufrads, bekannt ist, d.h. wenn die Verbindung 36 nicht vorliegt, kann das Vergleichsglied 20 die aktuelle Drehzahl des Motors 30 aufgrund der Kenntnis der festen Übersetzungsverhältnisse des Motorantriebs und des eingelegten Gangs (vgl. Informationsfluss 26) die aktuelle Drehzahl erstellen. Aufgrund der Rückkopplung 36 liegt jedoch in der in Figur 1 dargestellten Ausführungsform die Ist-Drehzahl als Ist-Betriebsparameter an dem Vergleichsglied 20 vor. Das Vergleichsglied 20 ermittelt den zugehörigen (d.h. aktuellen) Wirkungsgrad 22a anhand der Kennlinie 22 und vergleicht diesen Wirkungsgrad mit anderen Wirkungsgraden 22b, 22c, die sich bei anderen Drehzahlen ergeben würden, die anderen, einstellbaren Übersetzungsverhältnissen des Schaltgetriebes 40 entsprechen.

Durch Vergleich wird ermittelt, dass der Wirkungsgrad 22b, der sich mit der zugehörigen Soll-Drehzahl (und dem damit verknüpften Gang) erreichen lässt, über dem Ist-Wirkungsgrad 22a und über dem weiteren, durch Gangwahl erreichbaren Wirkungsgrad 22c liegt. Daher wird gemäß der Regelvorgabe der Gang gewählt, der mit dem höchsten Wirkungsgrad erreichen lässt. Ferner wird die Drehzahl des Motors 40 auf die Drehzahl eingestellt, die mit dem höchsten Wirkungsgrad gemäß Kennlinie 22 verknüpft ist. Der letztgenannte Schritt entspricht im Allgemeinen der Anpassung von weiteren Betriebsgrößen der Antriebskomponenten an den angesteuerten Gang des Schaltgetriebes 40. Der Ist-Wirkungsgrad 22a entspricht dem Wirkungsgrad der aktuellen Drehzahl, der Wirkungsgrad 22b entspricht dem durch Vergleich ermittelten höchsten Wirkungsgrad, d.h. dem Soll-Wirkungsgrad, und der Wirkungsgrad 22c entspricht einem weiteren, möglichen Wirkungsgrad bei einem anderen Gang, der mit dem Wirkungsgrad 22b verglichen wird, um den Gang zu ermitteln, bei dessen Drehzahl der größte Wirkungsgrad vorgesehen wird.

Im Kontext des Verfahrens entspricht der Ist-Betriebsparameter der aktuellen Motordrehzahl der Verbindung 36, wobei die Soll-Vorgabe der Drehzahl entspricht, die mit der Linie 22b gekennzeichnet ist. Da die Soll-Vorgabe mit einem höheren Wirkungsgrad (= Regelungsziel) verknüpft ist, wird der Ist-Betriebsparameter, d.h. die aktuelle Drehzahl, der Soll-Vorgabe (d.h. Drehzahl mit höherem Wirkungsgrad) angepasst, indem der Gang gewechselt wird. Der Gang, in den gewechselt wird, ist mit einem Übersetzungsverhältnis verknüpft, das zu einer Drehzahl 22b führt, die aufgrund der Kennlinie 22 mit einem höheren Wirkungsgrad verknüpft ist.

Die Regelvorgabe 10 kann als Teil eines äußeren Regelkreises betrachtet werden, der die Maximierung von Wirkungsgrad, Sicherheit oder Langlebigkeit zum Ziel hat. Die Soll-Vorgabe betrifft einen näher dargestellten inneren Regelkreis, und betrifft Betriebsgrößen von Antriebskomponenten wie Drehzahl, Drehmoment, Motorstrom, Motor- oder Akkumulatortemperatur, Motorleistung oder andere Größen, die erfasst werden, und deren Änderung mit einer Änderung von Wirkungsgrad, Sicherheit oder Langlebigkeit (= Größen der Regelvorgabe) einhergeht.

## Patentansprüche

1. Verfahren zur automatischen Steuerung des Gangs eines Schaltgetriebes (40) eines Elektrofahrrads, mit den Schritten: Erfassen mindestens eines Ist-Betriebsparameters einer Antriebskomponente (30) des Elektrofahrrads durch Erfassen einer Betriebsgröße der Antriebskomponente, Vergleichen des mindestens einen Ist-Betriebsparameters (36) mit einem Soll-Betriebsparameter (22b), die einen Betriebspunkt der Antriebskomponente (30) wiedergibt, der mit einem höheren Wirkungsgrad, einer höheren Sicherheit oder einer höheren Langlebigkeit von Komponenten des Elektroantriebs oder der Antriebskomponente über eine hinterlegte Verknüpfung (22) verknüpft ist, als bei dem Betrieb gemäß dem mindestens einen Ist-Betriebsparameter, und Annähern des mindestens einen Ist-Betriebsparameters (22a) an die Soll-Vorgabe (22b) durch Ändern des Gangs, wobei als der mindestens eine Ist-Betriebsparameter ein Tretkurbel-Drehmoment als Größe von angetriebenen Elektrofahrradkomponenten erfasst wird, wobei das Tretkurbel-Drehmoment dem Antriebsdrehmoment der Kurbel entspricht, wobei die Sollvorgabe ein Maximaldrehmoment wiedergibt, unterhalb dem die Tretkurbel-Antriebskomponenten, insbesondere das Schaltganggetriebe (40), ohne bleibende Schäden einen Gangwechsel durchführen können, wobei ein Zeitpunkt eines Gangwechsels derart ausgewählt wird, dass das erfasste Tretkurbel-Drehmoment während des Gangwechsels unter dem Maximaldrehmoment liegt, **dadurch gekennzeichnet, dass** ferner ein Gangwunsch eingegeben wird und, wenn der Gangwunsch von dem aktuellen Gangwunsch abweicht, ein Gangwechsel verzögert wird, bis der der Zeitpunkt erreicht ist, bei dem das erfasste Tretkurbel-Drehmoment unter dem Maximaldrehmoment liegt.

2. Verfahren nach Anspruch 1, wobei als ein zusätzlicher Ist-Betriebsparameter die Drehzahl des Elektromotors (30) als Betriebsgröße der Antriebskomponente erfasst wird, wobei die Soll-Vorgabe eine Drehzahl wiedergibt, bei der der Elektromotor (30) mit einem höheren Wirkungsgrad arbeitet, als die erfasste Drehzahl als Ist-Betriebsparameter, wobei der Gang derart ausgewählt wird, dass der Wirkungsgrad der Elektroantriebs höher ist, als bei anderen Gängen.

3. Verfahren nach Anspruch 1, wobei als ein zusätzlicher Ist-Betriebsparameter in Form der Drehzahl des Hinterrads als Betriebsgröße des Elektromotors und des Schaltgetriebes als Antriebskomponenten erfasst wird, wobei die Soll-Vorgabe eine Drehzahl des Hinterrads in Abhängigkeit des gewählten Gangs wiedergibt, die mit einer Drehzahl des Elektromotors (30) verknüpft ist, bei der dieser mit einem höheren Wirkungsgrad arbeitet, wobei der Gang derart ausgewählt wird, dass der Wirkungsgrad der Elektroantriebs höher ist, als bei anderen Gängen, und der ausgewählte Gang, zusammen mit der Drehzahl des Elektromotors (30), bei der ein höherer Wirkungsgrad erreicht wird, eine Drehzahl des Hinterrads vorsehen, die nicht mehr als eine vorgegebene Maximalabweichung von dem erfassten Drehzahl des Hinterrads abweicht.

4. Verfahren nach Anspruch 1, wobei als ein zusätzlicher Ist-Betriebsparameter ein Strom des Elektromotors erfasst wird, der von dem Elektromotor (30) aufgenommen wird, wobei die Soll-Vorgabe einen Maximalabgabestrom wiedergibt, unterhalb dem ein Akkumulator (32), der den Elektromotor versorgt, ohne bleibende Schäden und ohne die Gefahr der Überhitzung verbleibt, wobei der Gang derart ausgewählt wird, dass der Strom unter dem Maximalabgabestrom liegt.

5. Verfahren nach Anspruch 1, wobei als ein zusätzlicher Ist-Betriebsparameter ein Strom des Elektromotors (30) erfasst wird, der den Elektromotor aufnimmt, wobei die Soll-Vorgabe einen Maximalabgabestrom wiedergibt, unterhalb dem ein Ladezustand eines Akkumulators (32), der den Elektromotor versorgt, ausreichend ist, den Elektromotor für eine vorgegebene Distanz zu versorgen, wobei der Gang derart ausgewählt wird, dass der sich aus Distanz und Ladezustand ergebende Maximalabgabestrom nicht überschritten wird.

6. Verfahren nach einem der vorangegangenen Ansprüche, wobei die Soll-Vorgabe aus mehreren Soll-Vorgaben gemäß wählbaren Fahrprogrammen ausgewählt wird, wobei verschiedenen Fahrprogrammen unterschiedliche Soll-Vorgaben zugeordnet sind.

7. Vorrichtung zur automatischen Steuerung des Gangs eines Schaltgetriebes eines Elektrofahrrads, umfassend: eine Sensorvorrichtung eingerichtet zum Erfassen mindestens eines Ist-Betriebsparameters einer Antriebskomponente des Elektrofahrrads, wobei die Sensorvorrichtung mit der Antriebskomponente (30) verbunden ist, um eine Betriebsgröße der Antriebskomponente zu erfassen, eine Vergleichsvorrichtung eingerichtet zum Vergleichen des mindestens einen Ist-Betriebsparameters mit einer Soll-Vorgabe, die einen Betriebspunkt des Elektroantriebs (30) wiedergibt, der mit einem höheren Wirkungsgrad, einer höheren Sicherheit oder einer höheren Langlebigkeit von Komponenten des Elektroantriebs oder der Antriebskomponente verknüpft ist, wobei die Soll-Vorgabe in einem Speicher (20) der Vorrichtung abgelegt ist, und einen Gangschaltungsaktor, der zum Ändern des Gangs eines an den Gangschaltungsaktor anschließbaren Schaltgetriebes des Elektrofahrrads eingerichtet ist, wobei die Vorrichtung ferner eine Steuerung umfasst, die mit der Vergleichsvorrichtung verbunden ist, um eine von der Vergleichsvorrichtung vorgesehene Differenz zwischen Ist-Betriebsparameters und Soll-Vorgabe zu empfangen, wobei die Steuerung eingerichtet ist, durch Ansteuern des daran angeschlossenen Gangschaltungsaktors den mindestens einen Ist-Betriebsparameters an die Soll-Vorgabe durch Ändern des Gangs anzunähern, wobei als der mindestens eine Ist-Betriebsparameter ein Tretkurbel-Drehmoment als Größe von angetriebenen Elektrofahrradkomponenten erfassbar ist, wobei das Tretkurbel-Drehmoment dem Antriebsdrehmoment der Kurbel entspricht, wobei die Sollvorgabe ein Maximaldrehmoment wiedergibt, unterhalb dem die Tretkurbel-Antriebskomponenten, insbesondere das Schaltganggetriebe (40), ohne bleibende Schäden einen Gangwechsel durchführen können, wobei ein Zeitpunkt eines Gangwechsels derart auswählbar ist, dass das erfasste Tretkurbel-Drehmoment während des Gangwechsels unter dem Maximaldrehmoment liegt, **dadurch gekennzeichnet, dass** ferner ein Gangwunsch eingebbar ist und, wenn der Gangwunsch von dem aktuellen Gangwunsch abweicht, ein Gangwechsel verzögerbar ist, bis der der Zeitpunkt erreicht ist, bei dem das erfasste Tretkurbel-Drehmoment unter dem Maximaldrehmoment liegt.

## Claims

1. Method for automatically controlling the gear speed of a transmission (40) of an electric bicycle, having the steps: acquiring at least one actual operating parameter of a drive component (30) of the electric bicycle by acquiring an operating variable of the drive component, comparing the at least one actual operating parameter (36) with a setpoint operating parameter (22b) which represents an operating point of the drive component (30) which is linked, via a stored link (22), to a higher efficiency level, a higher safety level or a longer service life of components of the electric drive or of the drive component than in the case of operation according to the at least one actual operating parameter, and adjusting the at least one actual operating parameter (22a) to approach the target specification (22b) by changing the gear speed, wherein a pedal crank torque is acquired as the at least one actual operating parameter as a variable of driven electric bicycle components, wherein the pedal crank torque corresponds to the drive torque of the crank, wherein the target specification represents a maximum torque below which the pedal crank drive components, in particular the transmission (40), can carry out a gear speed change without permanent damage, wherein a time of a gear speed change is selected such that the acquired pedal crank torque is below the maximum torque during the gear speed change, **characterized in that** in addition a gear speed request is input, and if the gear speed request deviates from the current gear speed request, a gear speed change is delayed until the time is reached at which the acquired pedal crank torque is below the maximum torque.

2. Method according to Claim 1, wherein the rotational speed of the electric motor (30) is acquired as an additional actual operating parameter as an operating variable of the drive component, wherein the target specification represents a rotational speed at which the electric motor (30) operates with a higher efficiency level than the acquired rotational speed as an actual operating parameter, wherein the gear speed is selected in such a way that the efficiency level of the electric drive is higher than in other gear speeds.

3. Method according to Claim 1, wherein as an additional actual operating parameter in the form of the rotational speed of the rear wheel is acquired as an operating parameter of the electric motor and of the transmission as drive components, wherein the target specification represents a rotational speed of the rear wheel as a function of the selected gear speed, which rotational speed is linked to a rotational speed of the electric motor (30) at which said electric motor (30) operates with a relatively high efficiency level, wherein the gear speed is selected in such a way that the efficiency level of the electric drive is higher than in other gear speeds, and the selected gear speed, together with the rotational speed of the electric motor (30) at which a higher efficiency level is achieved, provide a rotational speed of the rear wheel which does not deviate from the acquired rotational speed of the rear wheel by more than a predefined maximum deviation.

4. Method according to Claim 1, wherein a current of the electric motor which is taken up by the electric motor (30) is acquired as an additional actual operating parameter, wherein the target specification represents a maximum output current below which an accumulator (32) which supplies the electric motor remains without permanent damage and without risk of overheating, wherein the gear speed is selected in such a way that the current is below the maximum output current.

5. Method according to Claim 1, wherein a current of the electric motor (30) which is taken up by the electric motor is acquired as an additional actual operating parameter, wherein the target specification represents a maximum output current below which a state of charge of an accumulator (32) which supplies the electric motor is sufficient to supply the electric motor for a predefined distance, wherein the gear speed is selected in such a way that the maximum output current which results from the distance and state of charge is not exceeded.

6. Method according to one of the preceding claims, wherein the target specification is selected from a plurality of target specifications according to selectable driving programs, wherein different driving programs are assigned different target specifications.

7. Device for automatically controlling the gear speed of a transmission of an electric bicycle comprising a sensor device configured to acquire at least one actual operating parameter of a drive component of the electric bicycle, wherein the sensor device is connected to the drive component (30) in order to acquire an operating variable of the drive component, a comparative device configured to compare the at least one actual operating parameter with a target specification which represents an operating point of the electric drive (30) which is linked to a higher efficiency level, a higher safety level or a longer service life of components of the electric drive or of the drive component, wherein the target specification is stored in a memory (20) of the device, and a gear shift actuator which is configured to change the gear speed of a transmission, which can be connected to the gear shift actuator, of the electric bicycle, wherein the device also comprises a controller which is connected to the comparator device in order to receive a difference, provided by the comparator device, between the actual operating parameter and the target specification, wherein the controller is configured to adjust, by actuating the gear shift actuator connected thereto, the at least one actual operating parameter to approach the target specification by changing the gear speed, wherein a pedal crank torque can be acquired as the at least one actual operating parameter as a variable of driven electric bicycle components, wherein the pedal crank torque corresponds to the drive torque of the crank, wherein the target specification represents a maximum torque below which the pedal crank drive components, in particular the transmission (40) can carry out a gear speed change without permanent damage, wherein a time of a gear speed change can be selected in such a way that the acquired pedal crank torque is below the maximum torque during the gear speed change, **characterized in that** in addition a gear speed request can be input, and if the gear speed request differs from the current gear speed request, a gear speed change can be delayed until the time is reached at which the acquired pedal crank torque is below the maximum torque.

## Revendications

1. Procédé de commande automatique du rapport d'un changement de vitesse (40) d'un vélo électrique, comprenant les étapes consistant à : détecter au moins un paramètre de fonctionnement réel d'un composant d'entraînement (30) du vélo électrique en détectant une grandeur de fonctionnement du composant d'entraînement, comparer ledit au moins un paramètre de fonctionnement réel (36) à un paramètre de fonctionnement nominal (22b) représentant un point de fonctionnement du composant d'entraînement (30), qui est associé à un rendement plus élevé, à une sécurité plus élevée ou à une durée de vie plus élevée de composants de l'entraînement électrique ou du composant d'entraînement par l'intermédiaire d'une association (22) enregistrée, que lors du fonctionnement conformément audit moins un paramètre de fonctionnement réel, et faire tendre ledit au moins un paramètre de fonctionnement réel (22a) vers la valeur nominale (22b) en modifiant le rapport, dans lequel un couple de pédalier est détecté en tant que ledit au moins un paramètre de fonctionnement réel sous la forme de grandeurs de composants de vélo électrique entraînés, dans lequel le couple de pédalier correspond au couple d'entraînement du pédalier, dans lequel la valeur nominale représente un couple maximal en-dessous duquel les composants d'entraînement du pédalier, en particulier le changement de vitesse (40), peuvent effectuer un changement de vitesse sans endommagements permanents, dans lequel un instant d'un changement de rapport est sélectionné de manière à ce que le couple de pédalier détecté pendant le changement de rapport soit inférieur au couple maximum,
**caractérisé en ce qu'**en outre, une demande de rapport est introduite et, si la demande de rapport diffère de la demande de rapport actuelle, un changement de rapport est retardé jusqu'à ce que l'instant où le couple de pédalier détecté est inférieur au couple maximum soit atteint.

2. Procédé selon la revendication 1, dans lequel la vitesse de rotation du moteur électrique (30) est détectée en tant que paramètre de fonctionnement réel supplémentaire sous la forme d'une grandeur de fonctionnement du composant d'entraînement, dans lequel la valeur nominale représente une vitesse de rotation à laquelle le moteur électrique (30) fonctionne avec un rendement plus élevé qu'à la vitesse de rotation détectée en tant que paramètre de fonctionnement réel, dans lequel le rapport est sélectionné de manière à ce que le rendement de l'entraînement électrique soit plus élevé que pour d'autres rapports.

3. Procédé selon la revendication 1, dans lequel en tant qu'un paramètre de fonctionnement réel supplémentaire sous la forme de la vitesse de rotation de la roue arrière est détecté en tant que grandeur de fonctionnement du moteur électrique et du changement de vitesse en tant que composants d'entraînement, dans lequel la valeur nominale représente une vitesse de rotation de la roue arrière en fonction du rapport sélectionné qui est associée à une vitesse de rotation du moteur électrique (30) à laquelle celui-ci fonctionne avec un rendement plus élevé, dans lequel le rapport est sélectionné de manière à ce que le rendement de l'entraînement électrique soit plus élevé que pour d'autres rapports, et le rapport sélectionné, en association avec la vitesse de rotation du moteur électrique (30) à laquelle un rendement plus élevé est obtenu, assurent une vitesse de roue arrière qui ne diffère pas de plus d'un écart maximal prédéfini par rapport à la vitesse mesurée de la roue arrière.

4. Procédé selon la revendication 1, dans lequel un courant du moteur électrique qui est consommé par le moteur électrique (30) est détecté en tant que paramètre de fonctionnement réel supplémentaire, dans lequel la valeur nominale représente un courant de sortie maximal en dessous duquel un accumulateur (32) alimentant le moteur électrique ne subit aucun endommagement permanent et ne présente aucun risque de surchauffe, dans lequel le rapport est sélectionné de manière à ce que le courant soit inférieur au courant de sortie maximal.

5. Procédé selon la revendication 1, dans lequel un courant du moteur électrique (30) qui est consommé par le moteur électrique est détecté en tant que paramètre de fonctionnement réel supplémentaire, dans lequel la valeur nominale représente un courant de sortie maximum en dessous duquel un état de charge d'un accumulateur (32) alimentant le moteur électrique est suffisant pour alimenter le moteur électrique sur une distance prédéfinie, dans lequel le rapport est sélectionné de manière à ce que le courant de sortie maximal résultant de la distance et de l'état de charge ne soit pas dépassé.

6. Procédé selon l'une des revendications précédentes, dans lequel la valeur nominale est sélectionnée parmi une pluralité de valeurs nominales selon des programmes de conduite pouvant être sélectionnés, dans lequel des valeurs nominales différentes sont associées à des programmes de conduite différents.

7. Dispositif de commande automatique du rapport d'un changement de vitesse d'un vélo électrique, comprenant : un dispositif capteur conçu pour détecter au moins un paramètre de fonctionnement réel d'un composant d'entraînement du vélo électrique, dans lequel le dispositif capteur est relié au composant d'entraînement (30) pour détecter une grandeur de fonctionnement du composant d'entraînement, un dispositif de comparaison conçu pour comparer ledit au moins un paramètre de fonctionnement réel à une valeur nominale représentant un point de fonctionnement de l'entraînement électrique (30), qui est associé à un rendement plus élevé, à une sécurité plus élevée ou à une durée de vie plus élevée de composants de l'entraînement électrique ou du composant d'entraînement, dans lequel la valeur nominale est stockée dans une mémoire (20) du dispositif, et un actionneur de changement de vitesse conçu pour modifier le rapport d'un changement de vitesse du vélo électrique pouvant être couplé à l'actionneur de changement de vitesse, dans lequel le dispositif comprend en outre une unité de commande reliée au dispositif de comparaison pour recevoir une différence, fournie par le dispositif de comparaison, entre des paramètres de fonctionnement réels et la valeur nominale, dans lequel l'unité de commande est conçue, par commande de l'actionneur de changement de vitesse qui lui est relié, pour faire tendre ledit au moins un paramètre de fonctionnement réel vers la valeur nominale en modifiant le rapport, dans lequel un couple de pédalier peut être détecté en tant que paramètre de fonctionnement réel sous la forme de grandeurs de composants de vélo électrique entraînés, dans lequel le couple de pédalier correspond au couple d'entraînement du pédalier, dans lequel la valeur nominale représente un couple maximal en dessous duquel les composants d'entraînement du pédalier, en particulier le changement de vitesse (40), peuvent effectuer un changement de vitesse sans endommagements permanents, dans lequel un instant d'un changement de rapport peut être sélectionné de manière à ce que le couple de pédalier détecté pendant le changement de rapport soit inférieur au couple maximal,
**caractérisé en ce qu'**en outre, une demande de rapport peut être introduite et, si la demande de rapport diffère de la demande de rapport actuelle, un changement de rapport peut être retardé jusqu'à ce que l'instant où le couple de pédalier détecté est inférieur au couple maximal soit atteint.
